# FASCICULE DE BREVET EUROPEEN

(11) **EP 3 983 279 B1**
(45) Date de publication et mention de la délivrance du brevet: **07.06.2023**
(21) Numéro de dépôt: 20742322.9
(22) Date de dépôt: 08.06.2020
(51) Int. Cl.: B62D 25/16, B60Q 1/04, B60R 21/34, B60R 19/24

(54) **MOYENS DE RENFORT POUR UNE STRUCTURE AVANT DE VÉHICULE AUTOMOBILE**
VERSTÄRKUNGSMITTEL FÜR EINE VORDERSTRUKTUR EINES KRAFTFAHRZEUGES
REINFORCEMENT MEANS FOR A FRONT STRUCTURE OF A MOTOR VEHICLE

(30) Priorité: 12.06.2019 FR 1906216
(43) Date de publication de la demande: 20.04.2022
(73) Titulaire: PSA Automobiles SA, 78300 Poissy (FR)
(72) Inventeur: ROBERT, Jacques, 92400 COURBEVOIE (FR)
(86) Numéro de dépôt international: PCT/FR2020/050968
(87) Numéro de publication internationale: WO 2020/249890

(56) Documents cités:
- WO-A1-2012/001800
- FR-A1- 2 913 393
- FR-A1- 2 986 774
- JP-A- 2003 118 639

## Description

### Domaine technique

L'invention a trait au domaine des véhicules automobiles, et, plus particulièrement, à la structure avant d'un véhicule automobile.

### Technique antérieure

La fixation des différents éléments composant la structure avant d'un véhicule automobile doit être robuste, toutefois, la structure doit rester souple pour limiter les dégâts occasionnés aux piétons lors d'un choc. Généralement, la structure avant d'un véhicule comprend un passage de roue avant, recouvert latéralement par une aile avant.

Le document de brevet publié FR 2 986 774 A1 divulgue un support multifonction servant à fixer ensemble différents éléments fonctionnels d'un véhicule. Ces éléments peuvent notamment être un support d'aile avant, un capot ou un projecteur lumineux. Le support multifonction est préférentiellement fabriqué d'un seul tenant. Mais ce support présente une forme complexe, ce qui rend sa fabrication, notamment par injection plastique, coûteuse. De plus, il manque de présenter des capacités d'absorption de choc piéton sur le capot et/ou sur le haut des ailes avant. Le document de brevet publié FR 2 921 627 A1 divulgue un support multifonction pour un véhicule automobile. Ce support permet de fixer ensemble un projecteur avant, une aile avant et un réservoir hydraulique de direction assistée. Ce support est un embouti qui comprend une plateforme et deux oreilles, la plateforme permettant de fixer le projecteur et l'aile, les oreilles permettant la fixation du réservoir au support. Similairement, il manque de présenter des capacités d'absorption de choc piéton sur le capot et/ou sur le haut des ailes avant.

Le document JP2003118639 A décrit divulgue une structure avant de véhicule selon le préambule de la revendication 1. Cette structure

possède à la fois des caractéristiques de rigidité et d'absorption des chocs qui ne limitent pas la liberté de formation de l'aile.

### Exposé de l'invention

L'invention a pour objectif de pallier au moins un des inconvénients de l'état de la technique susmentionné. Plus particulièrement, l'invention a pour objectif de gérer le choc piéton tout en assurant une fixation robuste du projecteur au passage de roue. L'invention a pour objet une structure avant de véhicule automobile, comprenant, à au moins un côté latéral : une aile avant, un passage de roue avant, un projecteur avant, des moyens de renfort le long d'un bord supérieur intérieur de l'aile avant, remarquable en ce que les moyens de renfort comprennent au moins une pièce de soutien du bord supérieur intérieur de l'aile avant, formant un ruban horizontal avec un profil latéral trapézoïdal, entre le passage de roue avant et ledit bord supérieur, et une pièce de fixation arrière du projecteur avant, située latéralement à une de l'au moins une pièce de soutien et supportée par le passage de roue avant.

Selon un mode avantageux de l'invention, la pièce de fixation est un embouti avec une portion inférieure verticale supportée par le passage de roue avant et une portion supérieure horizontale avec un orifice de fixation arrière du projecteur avant. Selon un mode avantageux de l'invention, le projecteur avant comprend une patte de fixation arrière superposée à la portion supérieure horizontale de la pièce de fixation et fixée à ladite portion par un moyen de fixation s'engageant avec l'orifice de fixation.

Selon un mode avantageux de l'invention, la patte de fixation arrière du projecteur avant comprend une zone de réception d'une butée de capot de la structure avant. Selon un mode avantageux de l'invention, la zone de réception de butée de capot de la patte de fixation arrière du projecteur avant est superposée à la portion supérieure horizontale de la pièce de fixation.

Selon un mode avantageux de l'invention, la zone de réception de butée de capot de la patte de fixation arrière du projecteur avant est frangible et située au-dessus d'un orifice auxiliaire de la portion supérieure horizontale de la pièce de fixation.

Selon un mode avantageux de l'invention, la zone frangible de réception de butée de capot de la patte de fixation arrière du projecteur avant comprend une portion centrale liée à une portion périphérique par des bras configurés pour rompre lorsqu'un effort de compression supérieur à une valeur prédéterminée est exercé sur la portion centrale.

Selon un mode avantageux de l'invention, la pièce de fixation comprend, en outre, une portion intermédiaire de profil en C ou U couché, reliant la portion inférieure verticale à la portion supérieure horizontale.

Selon un mode avantageux de l'invention, la pièce de soutien située latéralement à la pièce de fixation présente une portion supérieure horizontale supportant le bord supérieur intérieur de l'aile avant, ladite portion étant surélevée par rapport à la portion supérieure horizontale de la pièce de fixation.

Selon un mode avantageux de l'invention, le passage de roue comprend une paroi majoritairement verticale supportant l'au moins une pièce de soutien, et une paroi majoritairement horizontale attachée à la paroi majoritairement verticale et supportant la pièce de fixation.

Les mesures de l'invention sont intéressantes en ce qu'elles permettent une fixation robuste du projecteur sur le passage de roue avant, tout en gardant une bonne gestion du choc piéton. Cette gestion du choc piéton est assurée par la pièce de soutien du bord supérieur intérieur de l'aile avant, ladite pièce formant le ruban horizontal au profil latéral trapézoïdal apte à être déformé par écrasement lors d'un choc piéton sur la partie supérieure de l'aile, ou sur le capot prenant appui sur le bord supérieur de l'aile. La gestion du choc piéton est aussi assurée par la présence de la zone frangible de réception de la butée du capot, située sur la patte de fixation arrière du projecteur avant. Cette zone frangible va rompre lors d'un choc piéton sur le capot, permettant ainsi au capot de s'effacer. De plus, les moyens de renfort sont des pièces faciles à fabriquer par découpe et emboutissage, et faciles à monter sur le véhicule par soudage.

D'autres caractéristiques et avantages de la présente invention seront mieux compris à l'aide de la description et des dessins.

### Brève description des dessins

[Fig 1] est une vue en perspective d'un véhicule automobile comprenant une structure avant selon l'invention ;
[Fig 2] représente une vue en perspective d'un passage de roue avant avec des moyens de renfort selon l'invention ;
[Fig 3] représente une vue de la liaison entre le projecteur avant et les moyens de renfort selon l'invention.

### Description détaillée

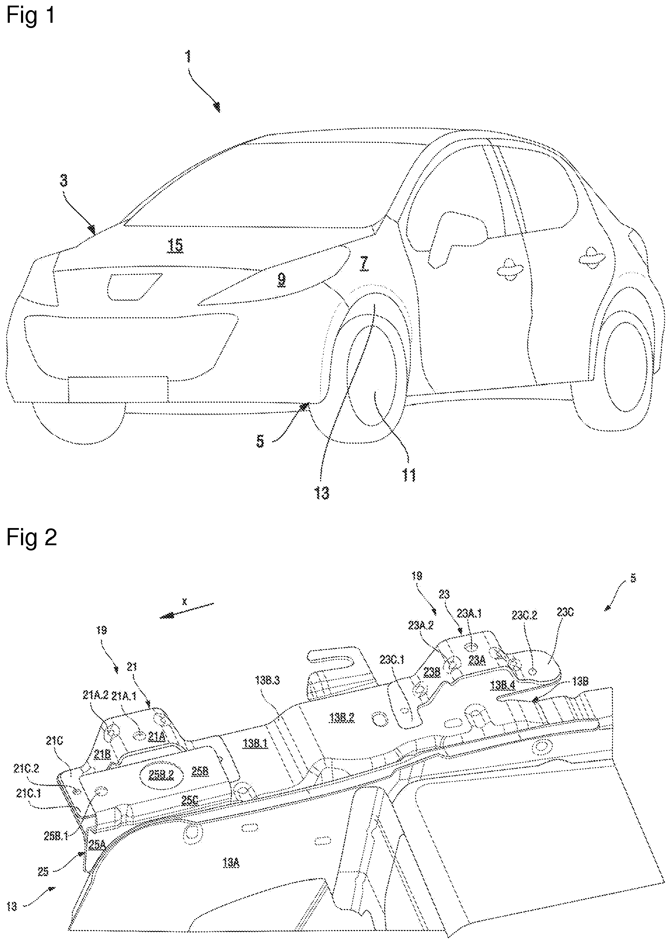

La figure 1 montre une vue en perspective d'un véhicule automobile selon l'invention. Le véhicule 1 comprend une structure avant 3 avec deux côtés latéraux 5 positionnés de part et d'autre dudit véhicule 1. Chaque côté latéral 5 comprend une aile avant 7 et un projecteur avant 9 positionné à l'avant de l'aile 7. En dessous de l'aile avant 7 se trouve une roue 11 surmontée par un passage de roue avant 13. Ce passage de roue 13 permet entre autres d'éviter la projection de particules et/ou d'eau dans le moteur du véhicule 1 (non visible sur ces figures). Entre les deux ailes avant 7 se trouve un capot 15, le capot 15 servant généralement à recouvrir le moteur du véhicule 1.

Plus particulièrement, le projecteur avant 9 s'étend latéralement, à l'avant de chacun des côtés 5 du véhicule 1, où il a une forme généralement courbée. Le projecteur 9 a vocation à améliorer la visibilité de la route pour le conducteur du véhicule 1. Le rattachement de chaque projecteur 9 au passage de roue avant 13 correspondant est réalisé par une patte de fixation arrière (non visible sur cette figure). La fixation du projecteur 9 et le renforcement de la structure avant 3 sont réalisés par des moyens de renfort (non visibles à la figure 1). Ces moyens de renfort sont positionnés le long d'un bord supérieur intérieur (non visible sur ces figures) de l'aile avant 7.

La figure 2 montre une vue du passage de roue avant du véhicule, et, plus particulièrement, des moyens de renfort montés sur le passage de roue.

Le passage de roue avant 13 comprend une paroi majoritairement verticale 13A qui sépare le moteur de la roue (visible à la figure 1), et une paroi majoritairement horizontale 13B qui s'étend depuis la paroi majoritairement verticale 13A et qui surplombe la roue. La paroi majoritairement verticale 13A est fixée à la paroi majoritairement horizontale 13B par des points de soudure par résistance électrique. La paroi majoritairement horizontale 13B comprend, en l'occurrence, deux portions horizontales (13B.1, 13B.2) reliées ensemble par une portion oblique 13B.3. La deuxième portion horizontale 13B.2, située à l'arrière de la première portion horizontale 13B.1, est surélevée par rapport à ladite première portion 13B.1. Une extrémité arrière de la deuxième portion horizontale 13B.2 présente avantageusement une extension 13B.4, cette extension 13B.4 s'étendant sur plus de la moitié de la largeur de la paroi majoritairement horizontale 13B du passage de roue 13. Sur la paroi majoritairement horizontale 13B sont fixés les moyens de renforts 19, préférentiellement au nombre de trois. Ces moyens de renforts 19 comprennent au moins une pièce de soutien (21, 23) et une pièce de fixation arrière 25.

Les pièces de soutien (21, 23) servent de soutien au bord supérieur intérieur de l'aile avant (l'aile étant visible à la figure 1). Chacune des pièces de soutien (21, 23) forme un ruban horizontal, le ruban présentant un profil latéral trapézoïdal. Chaque pièce (21, 23) comprend une portion supérieure horizontale (21A, 23A), deux portions latérales obliques (21B, 23B) et deux portions d'extrémités planes (21C, 23C). Les portions d'extrémités planes (21C, 23C) sont orientées vers l'extérieur du profil latéral trapézoïdal et présentent, chacune, une extension interne (21C.1, 23C.1) orientée vers la paroi majoritairement verticale 13A du passage de roue 13. Chaque extension (21C.1, 23C.1) présente un orifice de fixation (21C.2, 23C.2) à la paroi majoritairement horizontale 13B du passage de roue avant 13. De même, la portion supérieure horizontale (21A, 23A) de chaque pièce de soutien (21, 23) présente un orifice de fixation (21A.1, 23A.1) au bord supérieur intérieur de l'aile avant (non visible sur cette figure). En raison du fait que la deuxième portion horizontale 13B.2 est surélevée par rapport à la première portion horizontale 13B.1 du passage de roue 13, la deuxième pièce de soutien 23 est située à une hauteur supérieure à la première 21, et présente également une dimension plus faible. De plus, l'orifice de fixation 21A.1 de la première pièce de soutien 21 est disposé vers l'intérieur du véhicule, alors que l'orifice de fixation 23A.1 de la deuxième pièce de soutien 23 est positionné vers l'extérieur du véhicule. Des nervures de raidissement (21A.2, 23A.2), situées entre la portion supérieure horizontale (21A, 23A) et les portions latérales obliques (21B, 23B) des pièces de soutien (21, 23), et servant à les renforcer, sont respectivement situées vers l'extérieur ou vers l'intérieur des portions supérieures (21A, 23A) desdites pièces (21, 23). La deuxième pièce de soutien 23 est avantageusement fixée sur l'extension 13B.4 de la deuxième portion horizontale 13B.2 du passage de roue 13. Des éléments de fixation, bien connus en soi de l'homme du métier et non représentés sur ces figures, servent à maintenir les différentes pièces ensemble. Ces éléments de fixation peuvent être, par exemple, des points de soudure par résistance électrique.

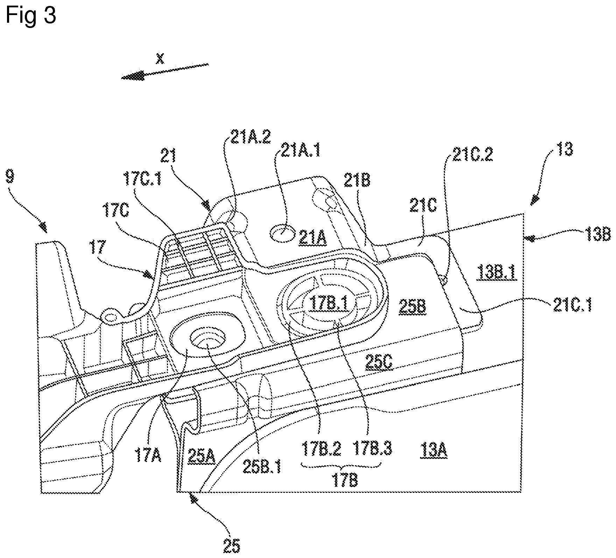

La pièce de fixation arrière 25 est située latéralement à la première pièce de soutien 21. Elle est supportée par le passage de roue avant 13. Cette pièce de fixation 25 sert de support au projecteur avant (visible aux figures 1 et 3). Cette pièce 25 est un embouti, et comprend une portion inférieure verticale 25A et une portion supérieure horizontale 25B. La portion inférieure verticale 25A est supportée par le passage de roue 13, et est plus particulièrement fixée à la paroi majoritairement verticale 13A du passage de roue 13 grâce à des moyens de fixation connus de l'homme du métier (comme des points de soudure par résistance électrique). La portion supérieure horizontale 25B supporte un projecteur avant (visible aux figures 1 et 3), auquel il est fixé grâce à un orifice de fixation arrière 25B.1. Cet orifice de fixation 25B.1 est apte à accueillir des moyens de fixation (non représentés sur ces figures), bien connus de l'homme du métier, pouvant notamment être des vis ou des écrous. À l'arrière de l'orifice de fixation arrière 25B.1 se trouve un orifice auxiliaire 25B.2, dont l'utilité sera décrite à la figure 3. Entre les portions inférieure verticale 25A et supérieure horizontale 25B de la pièce de fixation arrière 25 se trouve une portion intermédiaire 25C. Cette portion intermédiaire 25C présente un profil en C ou U couché, et permet de renforcer la pièce de fixation 25. Il est également important de noter que la portion supérieure horizontale 21A de la première pièce de soutien 21 est surélevée par rapport à la portion supérieure horizontale 25B de la pièce de fixation 25 au projecteur avant.

La figure 3 montre un agrandissement de la zone de liaison entre la patte de fixation du projecteur avant et la pièce de fixation.

Sur cette figure, on peut notamment voir la patte de fixation arrière 17 du projecteur avant 9, superposée à la portion supérieure horizontale 25B de la pièce de fixation 25. Cette patte de fixation 17 est fixée à la portion supérieure horizontale 25B par un moyen de fixation (non visible sur ces figures) s'engageant avec l'orifice de fixation 25B.1 de la pièce de fixation 25. Cet orifice de fixation 25B.1 est visible au travers d'un orifice médian 17A, positionné à l'avant de la patte de fixation 17. À l'arrière de l'orifice médian 17A se trouve une zone de réception 17B d'une butée de capot (non visible sur ces figures) de la structure avant. Cette zone de réception 17B est superposée à la portion supérieure horizontale 25B de la pièce de fixation 25, et, plus préférentiellement, à l'orifice auxiliaire (visible à la figure 2) de la portion supérieure horizontale 25B de la pièce de fixation 25. Cette zone de réception 17B comprend une portion centrale 17B.1 liée à une portion périphérique 17B.2 par des bras 17B.3. Ces bras 17B.3 sont configurés pour rompre lorsqu'un effort de compression supérieur à une valeur prédéterminée est exercé sur la portion centrale 17B.1. Ainsi, la zone de réception 17B est frangible. La patte de fixation arrière 17 du projecteur avant 9 comprend, en outre, un prolongement latéral 17C, qui s'étend latéralement à la portion supérieure horizontale 21A de la première pièce de soutien 21. Ce prolongement 17C comprend des rainures de renforcement 17C.1 aptes à renforcer ledit prolongement 17C contre les chocs.

## Revendications

1. Structure avant (3) de véhicule automobile (1), comprenant, à au moins un côté latéral (5) :
- une aile avant (7),
- un passage de roue avant (13),
- un projecteur avant (9)
- des moyens de renfort (19) le long d'un bord supérieur intérieur de l'aile avant (7), **caractérisée en ce que** les moyens de renfort (19) comprennent au moins une pièce de soutien (21, 23) du bord supérieur intérieur de l'aile avant (7), formant un ruban horizontal avec un profil latéral trapézoïdal, entre le passage de roue avant (13) et ledit bord supérieur, et une pièce de fixation arrière (25) du projecteur avant (9), située latéralement à une de l'au moins une pièce de soutien (21) et supportée par le passage de roue avant (13).

2. Structure avant (3) selon la revendication 1, **caractérisée en ce que** la pièce de fixation (25) est un embouti avec une portion inférieure verticale (25A) supportée par le passage de roue avant (13) et une portion supérieure horizontale (25B) avec un orifice de fixation arrière (25B.1) du projecteur avant (9).

3. Structure avant (3) selon la revendication 2, **caractérisée en ce que** le projecteur avant (9) comprend une patte de fixation arrière (17) superposée à la portion supérieure horizontale (25B) de la pièce de fixation (25) et fixée à ladite portion (25B) par un moyen de fixation s'engageant avec l'orifice de fixation (25B.1).

4. Structure avant (3) selon la revendication 3, **caractérisée en ce que** la patte de fixation arrière (17) du projecteur avant (9) comprend une zone de réception (17B) d'une butée de capot (15) de la structure avant (3).

5. Structure avant (3) selon la revendication 4, **caractérisée en ce que** la zone de réception (17B) de butée de capot (15) de la patte de fixation arrière (17) du projecteur avant (9) est superposée à la portion supérieure horizontale (25B) de la pièce de fixation (25).

6. Structure avant (3) selon la revendication 5, **caractérisée en ce que** la zone de réception (17B) de butée de capot (15) de la patte de fixation arrière (17) du projecteur avant (9) est frangible et située au-dessus d'un orifice auxiliaire (25B.2) de la portion supérieure horizontale (25B) de la pièce de fixation (25).

7. Structure avant (3) selon la revendication 6, **caractérisée en ce que** la zone frangible de réception (17B) de butée de capot (15) de la patte de fixation arrière (17) du projecteur avant (9) comprend une portion centrale (17B.1) liée à une portion périphérique (17B.2) par des bras (17B.3) configurés pour rompre lorsqu'un effort de compression supérieur à une valeur prédéterminée est exercé sur la portion centrale (17B.1).

8. Structure avant (3) selon l'une des revendications 2 à 7, **caractérisée en ce que** la pièce de fixation (25) comprend, en outre, une portion intermédiaire (25C) de profil en C ou U couché, reliant la portion inférieure verticale (25A) à la portion supérieure horizontale (25B).

9. Structure avant (3) selon l'une des revendications 2 à 8, **caractérisée en ce que** la pièce de soutien (21) située latéralement à la pièce de fixation (25) présente une portion supérieure horizontale (21A) supportant le bord supérieur intérieur de l'aile avant (7), ladite portion (21A) étant surélevée par rapport à la portion supérieure horizontale (25B) de la pièce de fixation (25).

10. Structure avant (3) selon l'une des revendications 1 à 9, **caractérisée en ce que** le passage de roue (13) comprend une paroi majoritairement verticale (13A) supportant l'au moins une pièce de soutien (21), et une paroi majoritairement horizontale (13B) attachée à la paroi majoritairement verticale (13A) et supportant la pièce de fixation (25).

## Patentansprüche

1. Vorderstruktur (3) eines Kraftfahrzeugs (1), die an mindestens einer Seitenseite (5) folgendes umfasst:
- einem vorderen Flügel (7),
- einem Vorderraddurchgang (13),
- Verstärkungsmittel (19) entlang einer inneren oberen Kante des vorderen Flügels (7),
**Dadurch gekennzeichnet, dass** die Verstärkungsmittel (19) mindestens ein Stützteil (21, 23) des oberen Innenrandes des vorderen Flügels (7) umfassen, das ein horizontales Band mit trapezförmigem Seitenprofil zwischen dem vorderen Raddurchgang (13) und dem oberen Rand bildet, und ein hinteres Befestigungselement (25) des vorderen Scheinwerfers (9), das seitlich von mindestens einem von dem einen Teil angeordnet ist Stützteil (21), das vom Vorderraddurchlass (13) getragen wird.

2. Vorderstruktur (3) nach Anspruch 1, **dadurch gekennzeichnet, dass** das Befestigungsteil (25) ein Mundstück mit einem vertikalen unteren Abschnitt (25A), der von dem vorderen Raddurchgang (13) getragen wird, und einem horizontalen oberen Abschnitt (25B) mit einer hinteren Befestigungsöffnung (25B.1) des vorderen Scheinwerfers (9) ist.

3. Vorderstruktur (3) nach Anspruch 2, **dadurch gekennzeichnet, dass** der vordere Projektor (9) eine hintere Befestigungslasche (17) umfasst, die über dem oberen horizontalen Abschnitt (25B) des Befestigungselements (25) liegt und an dem Abschnitt (25B) durch Befestigungsmittel befestigt ist, die mit der Befestigungsöffnung (25B.1) in Eingriff kommen.

4. Vorderstruktur (3) nach Anspruch 3, **dadurch gekennzeichnet, dass** die hintere Befestigungslasche (17) des vorderen Scheinwerfers (9) einen Aufnahmebereich (17B) eines Haubenanschlags (15) der vorderen Struktur (3) umfasst.

5. Vorderstruktur (3) nach Anspruch 4, **dadurch gekennzeichnet, dass** der Haubenanschlagaufnahmebereich (17B) der hinteren Befestigungslasche (17) des vorderen Scheinwerfers (9) über dem horizontalen oberen Abschnitt (25B) des Befestigungsteils (25) liegt.

6. Vorderstruktur (3) nach Anspruch 5, **dadurch gekennzeichnet, dass** der Haubenanschlagaufnahmebereich (17B) der hinteren Befestigungslasche (17) des vorderen Scheinwerfers (9) zerbrechbar ist und oberhalb einer Hilfsöffnung (25B.2) des horizontalen oberen Abschnitts (25B) des Befestigungsteils (25) angeordnet ist (1)

7. Vorderstruktur (3) nach Anspruch 6, **dadurch gekennzeichnet, dass** der Haubenanschlagbereich (17B) des hinteren Befestigungslasches (17) des vorderen Scheinwerfers (9) einen zentralen Abschnitt (17B.1) aufweist, der mit einem Umfangsabschnitt (17B.2) durch Arme (17B.3) verbunden ist zum Brechen, wenn eine Druckkraft über einem vorgegebenen Wert auf den Mittelteil (17B.1) ausgeübt wird.

8. Vorderstruktur (3) nach einem der Ansprüche 2 bis 7, **dadurch gekennzeichnet, dass** das Befestigungsteil (25) ferner einen Zwischenabschnitt (25C) mit liegendem C- oder U-Profil aufweist, der den vertikalen unteren Abschnitt (25A) mit dem horizontalen oberen Abschnitt (25B) verbindet.

9. Vorderstruktur (3) nach einem der Ansprüche 2 bis 8, **dadurch gekennzeichnet, dass** das Stützteil (21), das sich seitlich an dem Befestigungsteil (25) befindet, einen horizontalen oberen Abschnitt (21A) aufweist, der den inneren oberen Rand des vorderen Flügels (7) trägt, wobei der Abschnitt (21A) gegenüber dem horizontalen oberen Abschnitt (25B) erhöht ist das Befestigungsteil (25).

10. Vorderstruktur (3) nach einem der Ansprüche 1 bis 9, **dadurch gekennzeichnet, dass** der Raddurchlass (13) eine überwiegend vertikale Wand (13A), die das mindestens eine Stützteil (21) trägt, und eine überwiegend horizontale Wand (13B), die an der überwiegend vertikalen Wand (13A) befestigt ist und die Wand trägt, umfasst Befestigungsteil (25).

## Claims

1. Front (3) structure of motor vehicle (1), including, at least one side (5):
- a front wing (7),
- a front wheel passage (13),
- means of reinforcement (19) along a top inner edge of the front wing (7),
characterized that reinforcement means (19) include at least one support piece (21, 23) of the upper inner edge of the front wing (7), forming a horizontal ribbon with a trapezoidal lateral profile, between the front wheel passage (13) and the upper edge, and a rear attachment piece (25) of the front headlamp (9), located laterally at at least one supporting piece (21) and supported by the front wheel passage (13).

2. Front structure (3) in accordance with Claim 1, characterized as the fastening part (25) is a jam with a lower vertical portion (25A) supported by the front wheel passage (13) and a higher horizontal portion (25B) with a rear attachment opening (25B.1) of the front projector (9).

3. Front structure (3) according to Claim 2, characterized that the front projector (9) includes a rear attachment leg (17) superimposed on the horizontal upper portion (25B) of the attachment part (25) and fixed to the horizontal portion (25B) by a means of attachment engaging with the attachment hole (25B.1).

4. Front structure (3) according to Claim 3, characterized that the rear attachment tab (17) of the front projector (9) includes a reception area (17B) of a cover stop (15) of the front structure (3).

5. Front structure (3) in accordance with Claim 4, characterized as the receiving area (17B) of the hood stop (15) of the rear attachment tab (17) of the front projector (9) is superimposed on the horizontal top portion (25B) of the attachment piece (25).

6. Front structure (3) in accordance with Claim 5, characterized as the receiving area (17B) of the hood stop (15) of the rear attachment tab (17) of the front projector (9) is frangible and located above an auxiliary port (25B.2) of the horizontal top portion (25B) of the attachment part (25).

7. Front structure (3) in accordance with Claim 6, characterized that the frangible receiving zone (17B) of the hood stop (15) of the rear attachment tab (17) of the front projector (9) includes a central portion (17B.1) bound to a peripheral portion (17B.2) by arms (17B.3) configured for break when a compression effort greater than a predetermined value is applied to the center portion (17B.1).

8. Front structure (3) according to one of claims 2 to 7, **characterized by** that the attachment part (25) also includes an intermediate (25C) portion of a C or U-shaped profile lying between the vertical bottom portion (25A) and the horizontal top portion (25B).

9. Front structure (3) in accordance with one of claims 2 to 8, **characterized by** the support part (21) located laterally at the attachment part (25) having a horizontal upper portion (21A) bearing the upper inner edge of the front wing (7), that portion (21A) being raised from the horizontal upper portion (25B) of the attachment (25).

10. Front structure (3) according to one of claims 1 to 9, characterized that the wheel passage (13) consists of a predominantly vertical wall (13A) supporting at least one supporting piece (21), and a predominantly horizontal wall (13B) attached to the predominantly vertical wall (13A) and supporting the fastening piece (13A). 25).
